# EUROPÄISCHE PATENTSCHRIFT

(11) **EP 2 027 397 B1**
(45) Veröffentlichungstag und Bekanntmachung des Hinweises auf die Patenterteilung: **30.01.2019**
(21) Anmeldenummer: 07725243.5
(22) Anmeldetag: 15.05.2007
(51) Int. Cl.: F16F 15/124, F16D 3/12, F16D 3/68, F16C 3/02

(54) **DREHMOMENTÜBERTRAGUNGSEINRICHTUNG ZUM SCHWINGUNGSREDUZIERTEN ÜBERTRAGEN VON DREHMOMENTEN ÜBER WENIGSTENS EINE WELLE**
TORQUE TRANSMISSION DEVICE FOR THE LOW VIBRATION TRANSMISSION OF TORQUE VIA AT LEAST ONE SHAFT
DISPOSITIF TRANSMETTEUR DE COUPLE DESTINÉ À TRANSMETTRE AVEC VIBRATIONS RÉDUITES DES COUPLES VIA AU MOINS UN ARBRE

(30) Priorität: 09.06.2006 DE 102006026946; 29.09.2006 DE 102006046459
(43) Veröffentlichungstag der Anmeldung: 25.02.2009
(73) Patentinhaber: Süddeutsche Gelenkscheibenfabrik GmbH & Co. KG, 84478 Waldkraiburg (DE)
(72) Erfinder: ROTHE, Joachim, 84453 Mühldorf (DE); JERYE, Steffen, 83527 Haag (DE)
(74) Vertreter: Thum, Bernhard
(86) Internationale Anmeldenummer: PCT/EP2007/004326
(87) Internationale Veröffentlichungsnummer: WO 2007/140859

(56) Entgegenhaltungen:
- WO-A-2004/033834
- WO-A1-94/25766
- DE-A1- 4 322 710
- DE-C1- 19 750 005
- FR-A- 2 880 076
- FR-A1- 2 307 194
- JP-A- 58 170 944
- US-A- 4 355 990
- US-A1- 2002 190 450
- US-A1- 2004 069 092
- US-B1- 6 283 867

## Beschreibung

### Fachgebiet der Erfindung

Die Erfindung betrifft eine Drehmomentübertragungseinrichtung zum schwingungsreduzierten Übertragen von Drehmomenten über wenigstens eine Welle, mit einem Antriebselement und einem mit dem Antriebselement verbundenen Abtriebselement.

### Hintergrund der Erfindung

Drehmomentübertragungseinrichtungen der eingangs erwähnten Art werden beispielsweise im Antriebsstrang eines Kraftfahrzeuges, wie zum Beispiel zwischen der Kardanwelle und dem Getriebe, der Antriebswelle und dem Differential sowie in der Lenksäulenanordnung, eingesetzt. Dabei soll ein Drehmoment möglichst ohne Verluste von einer Welle auf eine andere Welle übertragen werden. Jedoch werden bei einer derart direkten Kopplung der beiden Wellen möglicherweise auftretende Vibrationen sowie Drehschwingungen nur unzureichend abgedämpft, was zu hörbaren Geräuschen in der Fahrgastzelle des Kraftfahrzeuges führt. Aus diesem Grund werden Drehmomentübertragungseinrichtungen mit Dämpfungselementen versehen, die derartige Vibrationen oder Drehschwingungen kompensieren sollen. So kann zum Beispiel zwischen dem Antriebselement und dem Abtriebselement ein zylindrisch ausgebildetes gummielastisches Dämpfungssegment vorgesehen werden, das zwischen dem Antriebselement und dem Abtriebselement eingepasst ist.

US 2002/0190450 A1 offenbart eine Dämpfungsanordnung. Die Dämpfungsanordnung weist ein Außenrohr aus Metall, ein hohles Innenelement aus Metall und einen elastischen Körper auf. Das Außenrohr verfügt über eine Universalkupplung an einem Endabschnitt. Das Außenrohr hat an seinem anderen Endabschnitt zudem eine Kappe. Das Innenelement weist einen Abschnitt, der in das Außenrohr gesteckt werden soll, und einen Abschnitt auf, der nach außen vom Außenrohr hervorsteht.

DE 197 50 005 C1 offenbart eine Lenkspindel, die ein erstes stabartiges Profil und ein zweites Profil aufweist. Die Querschnittsformen bzw. Umfangskonturen der beiden Profile und sind durch jeweils aufeinanderfolgende bogenförmige Abschnitte gebildet. Die inneren Abmessungen des äußeren Profils und die äußeren Abmessungen des inneren Profils unterscheiden sich derart, sodass zwischen diesen beiden Teilen ein Spaltraum gebildet wird, der entlang seines Umfanges eine wechselnde Breite aufweist. Zur teilweisen Überbrückung dieses Spaltes und zur Begünstigung der Gleitfähigkeit der Teile relativ zueinander ist am inneren Profil eine aus einem Kunststoffmaterial mit geringem Reibungskoeffizienten gefertigte Gleithülse festgelegt. Durch den Einbau wird die Gleithülse etwas verformt und dadurch vorgespannt.

WO94/25766 offenbart eine Kupplung. Die Kupplung weist drei Hauptkomponenten auf, ein äußeres rohrförmiges Wellenglied, ein inneres Wellenglied und ein Federglied, das zwischen dem äußeren Wellenglied und dem inneren Wellenglied angeordnet ist. Das innere Wellenglied und das äußere Wellenglied sind relativ zueinander gleitfähig. Das äußere Wellenglied, das innere Wellenglied und das Federglied haben jeweils eine Gestalt ähnlich einem doppelten B.

Es ist eine Aufgabe der vorliegenden Erfindung, eine Drehmomentübertragungseinrichtung vorzusehen, dessen Dämpfungseigenschaften verbessert und auf den jeweiligen Verwendungszweck gezielt abgestimmt werden können.

### Zusammenfassung der Erfindung

Die oben genannte Aufgabe wird mit einer Drehmomentübertragungseinrichtung mit den Merkmalen des Patentanspruchs 1 gelöst.

Weitere Ausführungsformen sind in den abhängigen Ansprüchen angegeben.

Die erfindungsgemäße Drehmomentübertragungseinrichtung zum schwingungsreduzierten Übertragen von Drehmomenten über wenigstens eine Welle, die zur Kopplung zweier Wellenenden dient, umfasst ein Antriebselement und ein mit dem Antriebselement verbundenes Abtriebselement, wobei zwischen dem Antriebselement und dem Abtriebselement wenigstens eine Dämpfungsanordnung ausgebildet ist, die das Antriebselement mit dem Abtriebselement relativ zueinander verdrehbar miteinander verbindet, wobei die Dämpfungsanordnung mit wachsender Relativverdrehung zwischen Antriebselement und Abtriebselement eine gestuft progressiv verlaufende Kennung aufweist. Das Antriebselement weist eine Anschlagformation auf. Das Abtriebselement weist eine komplementäre Gegenanschlagformation auf. Zwischen dem Antriebselement und dem Abtriebselement ist außerhalb der zusammenwirkenden Anschlagformation und Gegenanschlagformation wenigstens ein gummielastischer Vordämpferkörper vorgesehen, der das Antriebselement drehschwingungsdämpfend mit dem Abtriebselement verbindet. Zwischen der Anschlagformation und der komplementären Gegenanschlagformation ist ein umlaufender radialer Zwischenraum ausgebildet, der ein Drehspiel bereitstellt und in dem eine umlaufende komprimierbare Dämpfungsschicht vorgesehen ist.

Durch die Ausbildung der Dämpfungsanordnung mit einer gestuft progressiv verlaufenden Kennlinie lässt sich erreichen, dass in einem normalen Betriebsbereich moderater Drehmomentübertragung Drehschwingungen zuverlässig gedämpft werden. Kommt es jedoch zu einer Übertragung sehr großer Drehmomente, so nimmt die Kennlinie einen steilen Verlauf ein, bis schließlich das Drehmoment unmittelbar ohne weitere Schwingungsdämpfung übertragen wird.

Mit der erfindungsgemäßen Drehmomentübertragungseinrichtung kann erreicht werden, dass zunächst im normalen Betriebsbereich moderater Drehmomentübertragung das Drehspiel von Anschlagformation und Gegenanschlagformationen unter Ausnutzung einer schwingungsdämpfenden Wirkung durchlaufen wird. Sobald das Drehspiel jedoch im Wesentlichen vollständig aufgebraucht ist, kommt es zu einer unmittelbaren Drehmomentübertragung von dem Antriebselement zu dem Abtriebselement. Die Anschlagformation und die Gegenanschlagformation können durch Urformen oder Umformen an dem Antriebselement sowie an dem Abtriebselement ausgebildet werden. Beispielsweise lassen sich rohrförmig ausgebildete Antriebselemente beziehungsweise Abtriebselemente durch Rollumformen mit einer entsprechenden Anschlagformation beziehungsweise Gegenanschlagformation versehen.

Bei einer vorteilhaften Ausführungsform der Erfindung kann in diesem Zusammenhang vorgesehen sein, dass die Anschlagformation und die Gegenanschlagformation in Form einer spielbehafteten Keilwellenverzahnung ausgebildet sind. Alternativ hierzu kann ferner vorgesehen sein, dass die Anschlagformation und die Gegenanschlagformation in Form einer spielbehafteten polygonalen Formschlussverbindung ausgebildet sind. In beiden Fällen ist zwischen der Anschlagformation und der Gegenanschlagformation jeweils ein Zwischenraum ausgebildet, der das erforderliche Drehspiel bereitstellt.

Eine Weiterbildung der Erfindung sieht vor, dass zwischen der Anschlagformation und der Gegenanschlagformation eine komprimierbare Dämpfungsschicht aus Gummimaterial vorgesehen ist. Um ein bestimmtes dynamisches Verhalten dieser Dämpfungsschicht zu erreichen, sieht eine Weiterbildung der Erfindung vor, dass in die Gummischicht eine Fadeneinlage eingebettet ist, welche einer übermäßig starken Deformation entgegenwirkt. Zusätzlich oder alternativ hierzu kann auch vorgesehen sein, dass in die Gummischicht eine Metalleinlage eingebettet ist. Fadeneinlage oder Metalleinlage tragen jeweils zur Progressivität bei.

Gemäß der Erfindung kann die gestuft progressive Kennlinie der erfindungsgemäßen Drehmomentübertragungseinrichtung dadurch erreicht werden, dass zwischen dem Antriebselement und dem Abtriebselement außerhalb der zusammenwirkenden Anschlagformation und Gegenanschlagformation wenigstens ein gummielastischer Vordämpferkörper vorgesehen ist, der das Antriebselement drehschwingungsdämpfend mit dem Abtriebskörper verbindet. Es ist vorgesehen, dass sich zunächst der Vordämpferkörper schwingungsreduzierend deformiert, da dieser mit einer geringen Steifigkeit ausgebildet ist. Während der Deformation des Vordämpferkörpers wird ein Drehspiel zwischen der Anschlagformation und der Gegenanschlagformation aufgebraucht. Ist dieses Spiel aufgebraucht, so wirken die Anschlagformation und die Gegenanschlagformation - gegebenenfalls unter Zwischenschaltung einer zwischen diesen vorgesehenen weiteren Dämpfungsschicht - drehmomentübertragend zusammen.

Eine Weiterbildung der Erfindung sieht vor, dass zwischen dem Antriebselement und dem Abtriebselement ein Zwischenelement angeordnet ist, wobei das Zwischenelement rohrförmig ausgebildet und mit dem Antriebselement und dem Abtriebselement unter jeweiliger Zwischenschaltung einer Dämpfungsanordnung verbunden ist. Dies bedeutet, dass bei dieser Ausführungsvariante das Antriebselement und das Abtriebselement nicht unmittelbar miteinander gekoppelt sind, sondern unter Zwischenschaltung des Zwischenelements.

Bei der Ausführungsvariante mit Zwischenelement kann ferner vorgesehen sein, dass das Zwischenelement in axialer Richtung betrachtet hintereinander mit dem Antriebselement und dem Abtriebselement verbunden ist, wobei sich das Antriebselement mit dem Abtriebselement nicht überlappt. Dabei handelt es sich also um eine räumlich serielle Anordnung. Alternativ hierzu können sich die Komponenten Antriebselement, Abtriebselement und Zwischenelement jedoch auch in axialer Richtung überlappen, um Bauraum einzusparen.

Hinsichtlich einer Anordnung mit Zwischenelement sieht eine Weiterbildung der Erfindung vor, dass das Antriebselement oder/und das Abtriebselement eine Anschlagformation aufweisen und dass das Zwischenelement in seinem jeweiligen mit dem Antriebselement und dem Abtriebselement zusammenwirkenden Bereich eine komplementäre Gegenanschlagformation aufweist, wobei die Anschlagformation und die Gegenanschlagformation jeweils mit gegenseitigem Radialspiel und Drehspiel ineinander greifen. Ferner kann in diesem Zusammenhang erfindungsgemäß vorgesehen sein, dass das Zwischenelement rohrförmig ausgebildet ist und einenends das Antriebselement sowie anderenends das Abtriebselement in sich aufnimmt.

Häufig stellt sich bei Anordnungen, die Verzahnungen oder dergleichen aufweisen, das Problem, dass bei einer dynamischen Beanspruchung solcher Verzahnungen unerwünschte Verzahnungsgeräusche durch eine Wechselwirkung miteinander in Kontakt tretender Flächen auftreten. Diese Geräusche breiten sich dann in einem Fahrzeug aus und können im Fahrgastraum von Insassen als unangenehm empfunden werden. Um dem Auftreten dieser Geräusche entgegenzuwirken, sieht eine Weiterbildung der Erfindung vor, dass in dem Antriebselement oder/und in dem Abtriebselement oder/und in dem Zwischenelement ein perforierter Gummikörper zur Körperschalldämpfung aufgenommen ist. An den Grenzflächen der Perforationen des Gummikörpers bricht sich der Schall und wird teilweise reflektiert. Es kommt zu Interferenzen und einer wesentlichen Schalldämpfung.

Erfindungsgemäß kann vorgesehen sein, dass eine Komponente von Antriebselement und Abtriebselement zur Anbringung an einem Wellenende und dass die andere Komponente von Antriebselement und Abtriebselement zur Anbringung an einem Gelenkrohr oder an einem homokinetischen Gelenk oder an einem Kreuzgelenk ausgebildet ist. Die jeweilige Schnittstelle zu dem Wellenende wird in Anpassung an den jeweiligen Einsatzfall ausgeführt.

Eine weitere Ausführungsvariante der Erfindung sieht vor, dass zwischen dem Antriebselement und dem Abtriebselement eine gummielastische Dämpfungsschicht vorgesehen ist, die das Antriebselement mit dem Abtriebselement verbindet, wobei in die Dämpfungsschicht Wälzkörper eingebettet sind. Dabei kann erfindungsgemäß vorgesehen sein, dass die gummielastische Dämpfungsschicht im Bereich der Wälzkörper in Umfangsrichtung der Drehmomentübertragungseinrichtung betrachtet ein Spiel zu dem jeweiligen Wälzkörper vorsieht. Im Betrieb wird bei dieser Lösung zunächst die gummielastische Dämpfungsschicht unter verhältnismäßig geringem Widerstand deformiert, bis sich die Wälzkörper an die das Spiel definierenden Grenzflächen der gummielastischen Dämpfungsschicht anlegen. Sodann erfolgt ein Sprung in der Kennlinie. Jede weitere Deformation lässt sich nur unter erheblich größerem Widerstand erreichen, da die Wälzkörper an den Grenzflächen abwälzen und die gummielastische Dämpfungsschicht unter Flächenpressung deformieren. Auch so lässt sich eine gestuft progressive Kennlinie erreichen.

Im modernen Fahrzeugbau wird zunehmend auch mehr Wert auf ein gezieltes Verhalten im Crash-Fall gelegt. So wird in diesem Zusammenhang versucht, den Antriebsstrang teleskopierbar beziehungsweise kollabierbar auszubilden. Dies bedeutet, dass sich der Antriebsstrang infolge einer vorbestimmten axialen Mindestbelastung, welche an sich nur in einer Unfallsituation auf den Antriebsstrang einwirkt, beispielsweise weil der Motorblock infolge eines Frontalaufpralls in dem Fahrzeug nach hinten verschoben wird, axial verkürzen kann. Um dies zu unterstützen, sieht eine Weiterbildung der Erfindung vor, dass das Antriebselement und das Abtriebselement bei Überschreiten einer vorbestimmten Axialkraft in Achsrichtung zueinander teleskopierbar sind. Dadurch kann ein unerwünschtes Ausknicken im Bereich der erfindungsgemäßen Drehmomentübertragungseinrichtung verhindert werden.

### Kurze Beschreibung der Figuren

Die Erfindung wird im Folgenden beispielhaft anhand der beiliegenden Figuren im Hinblick auf eine Mehrzahl von Ausführungsformen beschrieben. Es stellen dar:
- Fig.1: eine Längsschnittansicht einer beispielhaften Drehmomentübertragungseinrichtung entsprechend der Schnittlinie I-I aus Fig.2;
- Fig.2: eine Seitenansicht von links von Fig.1;
- Fig.3: eine zweiten beispielhaften Ausführungsform einer erfindungsgemäßen Drehmomentübertragungseinrichtung in Längsschnittansicht;
- Fig.4: die zweite beispielhafte Ausführungsform in einer Seitenansicht von links;
- Fig.5: eine dritte Ausführungsform einer erfindungsgemäßen Drehmomentübertragungsrichtung in Schnittansicht gemäß der Schnittlinie V-V aus Fig.6;
- Fig.6: eine Seitenansicht der Drehmomentübertragungseinrichtung gemäß Fig.5 von links;
- Fig.7: eine vierte Ausführungsform der erfindungsgemäßen Drehmomentübertragungseinrichtung in Schnittansicht gemäß der Schnittlinie VII-VII aus Fig.8;
- Fig.8: eine Seitenansicht der Ausführungsform gemäß Fig.7 von links;
- Fig.9: eine weitere erfindungsgemäße Ausführungsform der Drehmomentübertragungseinrichtung in Schnittansicht gemäß der Schnittlinie IX-IX gemäß Fig.10;
- Fig.10: eine Seitenansicht der Drehmomentübertragungseinrichtung gemäß Fig.9 von links;
- Fig.11: eine Schnittansicht einer weiteren erfindungsgemäßen Drehmomentübertragungseinrichtung gemäß der Schnittlinie XI-XI aus Fig.12;
- Fig.12: eine Seitenansicht von links der Drehmomentübertragungseinrichtung gemäß Fig.11;
- Fig.13: eine Schnittansicht gemäß der Schnittlinie XIII-XIII aus Fig.14;
- Fig.14: die weitere erfindungsgemäße Drehmomentübertragungseinrichtung gemäß Fig.13 in einer Seitenansicht von links.
- Fig.15: eine weitere beispielhafte Drehmomentübertragungseinrichtung im achsenthaltenen Längsschnitt entlang der Schnittlinie XV-XV aus Fig.16;
- Fig.16: eine Seitenansicht von links von Fig.15;
- Fig.17: eine weitere Ausführungsform einer beispielhafte Drehmomentübertragungseinrichtung im achsenthaltenden Längsschnitt entlang der Schnittlinie XVII-XVII gemäß Fig.18;
- Fig.18: die Anordnung gemäß Fig.17 in einer Seitenansicht von links
- Fig. 19 bis 30: weitere Ausführungsformen erfindungsgemäßer Drehmomentübertragungseinrichtungen.

### Detaillierte Beschreibung der Ausführungsbeispiele

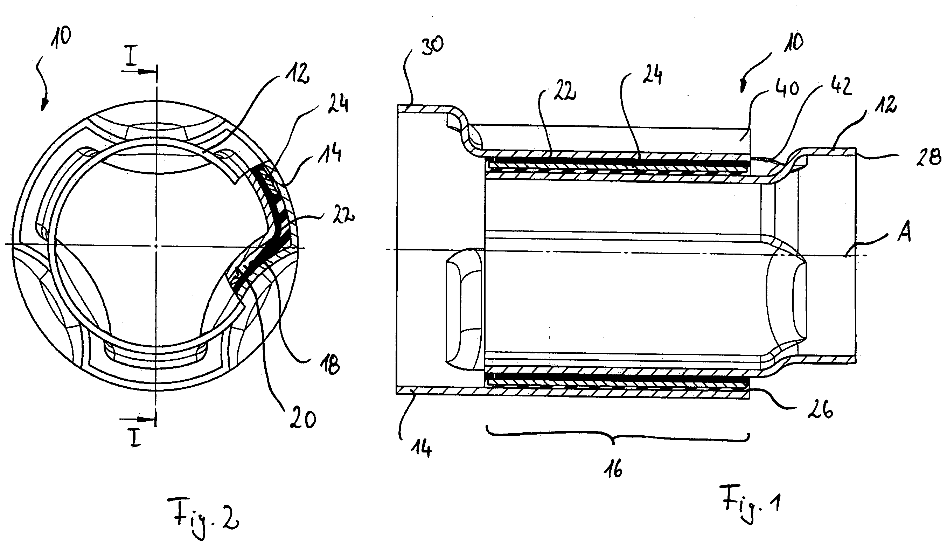

In Fig.1 ist eine beispielhafte Drehmomentübertragungseinrichtung in Längsschnittdarstellung gezeigt und allgemein mit 10 bezeichnet. Diese umfasst ein rohrförmiges Antriebselement 12 sowie ein mit diesem verbundenes Abtriebselement 14. Das Abtriebselement 14 nimmt in seinem rechten Bereich den linken Bereich des Antriebselements 12 in sich auf.

Wie man in Fig.1 und 2 erkennt, sind das Antriebselement 12 und das Abtriebselement 14 in ihrem axialen Überlappungsbereich 16 derart profiliert ausgebildet, dass das Antriebselement 12 Anschlagflächen 18 darbietet und dass das Abtriebselement 14 korrespondierende Gegenanschlagflächen 20 darbietet. Die Anschlagflächen 18 sowie Gegenanschlagflächen 20 bilden über den gesamten Umfang des Antriebselements bzw. des Abtriebselements eine Anschlagformation 40 sowie eine Gegenanschlagformation 42.

Zwischen den Anschlagflächen 18 und den Gegenanschlagflächen 20 ist ein radialer Zwischenraum ausgebildet, der wie folgt gefüllt ist. Zum Einen weist dieser Zwischenraum eine Fadeneinlage 22 auf. Darüber hinaus sind in dem Zwischenraum einzelne in axialer Richtung verlaufende Metallstreifen 24 vorgesehen. Sowohl die Fadeneinlage 22 als auch die Metallstreifen 24 sind in eine Gummilage 26 eingebettet. Dadurch ist das Antriebselement 12 mit dem Abtriebselement derart verbunden, dass in Folge einer Drehmomentübertragung das Antriebselement sich relativ zu dem Abtriebselement um die Längsachse A verdrehen kann. Diese Verdrehung erfolgt zunächst unter Scherbeanspruchung der Gummischicht. Mit zunehmendem Relativverdrehungswinkel nimmt jedoch der Widerstand progressiv zu, da jeder weiteren Verdrehung die Fadeneinlagen 22 entgegenwirkt. Auch die Metallstreifen 24 hemmen eine weitere Relativverdrehung. Schließlich werden im Bereich der Anschlagfläche 18 und der Gegenanschlagfläche 20 jeweils die Fadeneinlage 22 sowie die Gummilage 26 so stark komprimiert, dass im Wesentlichen kein weiteres Nachgeben mehr möglich ist. Die weitere Drehmomentübertragung erfolgt unmittelbar ohne jegliche weitere Relativverdrehung zwischen Antriebselement 12 und Abtriebselement 14. Dadurch können Drehschwingungen mit gestuft progressiver Kennung gedämpft werden, bis es schließlich bei maximalem Relatiwerdrehungswinkel zwischen Antriebselement 12 und Abtriebselement 14 zu einer unmittelbaren Drehmomentübertragung ohne weitere Vergrößerung des Relatiwerdrehungswinkels kommt. Es sei angemerkt, dass die freien Enden 28 und 30 der Drehmomentübertragungseinrichtung 10 gemäß Fig.1 und 2 zur Kopplung zweier Wellenenden, insbesondere zweier Wellenenden einer Kardanwelle nutzbar sind, die vorzugsweise durch Anschweißen angebracht werden.

Ferner erkennt man in Fig.1, dass bei Aufbringen einer hinreichend großen Axialkraft und einer entsprechenden Gegenkraft am Antriebselement 12 und am Abtriebselement 14 diese beiden Elemente teleskopierbar ineinander schiebbar sind, wobei die Verbindung zwischen Antriebselement 12 und Abtriebselement 14 über die Gummilage 26 zerstört wird. Dies ist insbesondere in einer Unfallsituation vorteilhaft, bei der beispielsweise eine Art Kollabieren des Antriebsstrangs erwünscht ist. Insbesondere in Fällen, in denen aufgrund eines Unfalls der Motorblock in das Fahrzeug hineingeschoben wird, ist ein derartiges Kollabieren der Kardanwelle erwünscht, um ein unkontrolliertes Ausknicken oder eine andersartige raumfordernde Deformation zu unterbinden.

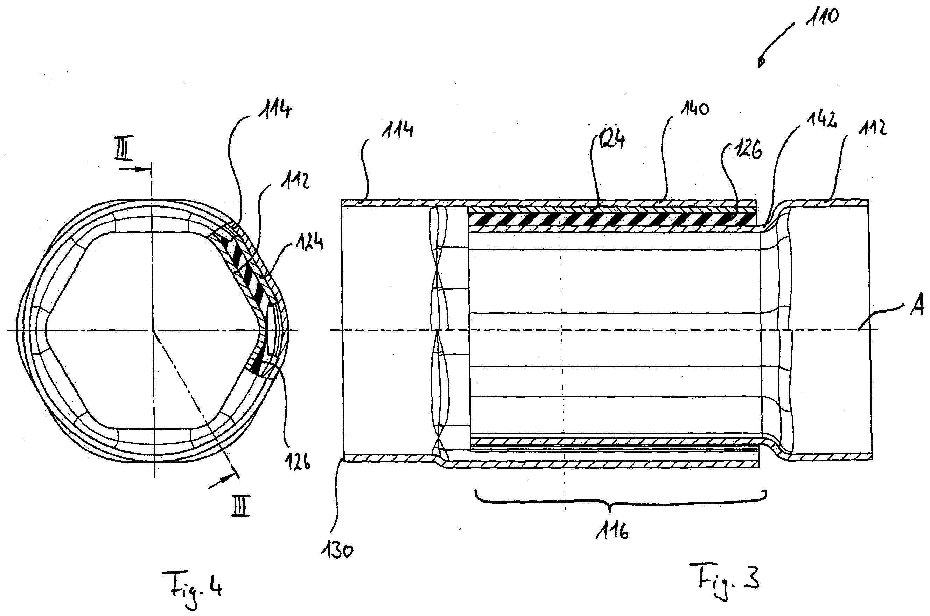

Fig.3 zeigt nun eine beispielhafte Abwandlung. Es werden dieselben Bezugszeichen verwendet, wie bei Fig.1, jedoch mit der Ziffer "1" vorangestellt.

Die beispielhafte Ausführungsform gemäß Fig.3 und 4 unterscheidet sich von der Ausführungsform gemäß Fig.1 und 2 im Wesentlichen dadurch, dass sie keine Fadeneinlage enthält. Die Verbindung zwischen dem Antriebselement 112 und dem Abtriebselement 114 erfolgt allein durch die Gummilage 126 und die Metallstreifen 124. Darüber hinaus unterscheidet sich diese Ausführungsform von der ersten Ausführungsform gemäß Fig.1 und 2 dadurch, dass die Anschlagformation 140 und die Gegenanschlagformation 142 nicht durch eine Art Verzahnung realisiert ist, wie in Fig.1 und 2 gezeigt, sondern durch zwei zueinander korrespondierende Polygone, hier Sechsecke, deren zueinander parallele Flächen im Abstand zueinander angeordnet sind, wobei zwischen diesen die Gummilage 126 und der Metallstreifen 124 angeordnet sind.

Das Verhalten im Betrieb ist jedoch ähnlich, wie vorstehend bereits beschrieben. Auch hier erfolgt eine Relativverdrehung mit gestuft progressiver Kennlinie, bis es schließlich zu einem Zustand maximaler Kompression kommt, in dem im Wesentlichen keine weitere Relatiwerdrehung mehr möglich ist.

Auch die Anordnung gemäß Fig.3 und 4 lässt sich beispielsweise durch Verschweißen mit zwei Wellenenden an einer Welle zur Schwingungsreduktion anbringen.

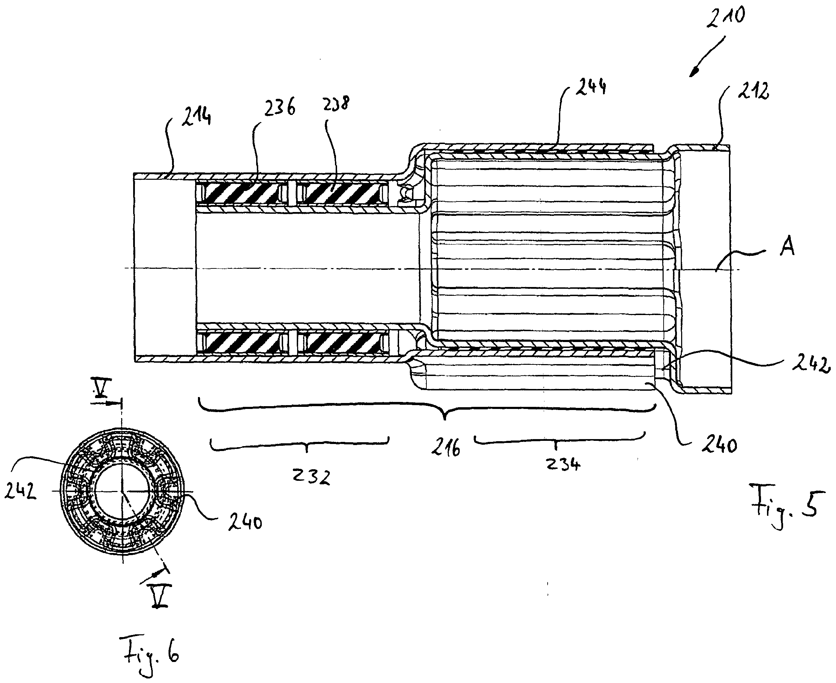

Eine weitere Ausführungsform gemäß Fig.5 und 6 wird wiederum unter Verwendung derselben Bezugszeichen beschrieben, jedoch mit der Ziffer "2" vorangestellt. Bei dieser Ausführungsform überlappen sich das Antriebselement 212 und das Abtriebselement 214 in einem größeren axialen Bereich 216. Dieser axiale Bereich 216 ist aufteilbar in einen ersten axialen Teilbereich 232 und einen zweiten axialen Teilbereich 234. In dem ersten axialen Teilbereich 232 sind das Antriebselement 212 und das Abtriebselement 214 jeweils kreiszylindrisch ausgebildet. Sie sind in einem beträchtlichen Abstand zueinander angeordnet, das heißt sie schließen einen verhältnismäßig breiten Ringspalt miteinander ein. In diesem Ringspalt sind zwei Gummilagen 236 und 238 angebracht, die das Antriebselement 212 mit dem Abtriebselement 214 verbinden.

In dem zweiten axialen Teilbereich 234 ist das Antriebselement 212 über seinen Umfang hinweg gewellt ausgebildet, so dass es eine Anschlagformation 240 ausbildet. Gleichermaßen ist das Abtriebselement 214 in dessen Innenraum mit einer korrespondierenden welligen Kontur ausgebildet, so dass es eine Gegenanschlagformation 242 bildet. Die Anschlagformation 240 und die Gegenanschlagformation 242 sind zueinander komplementär ausgebildet, das heißt, sie greifen ineinander ein, wobei zwischen diesen ein umlaufender Zwischenraum ausgebildet ist. Dieser Zwischenraum ist mit einer Gummilage 244 gefüllt.

Der axiale Teilbereich 232 bildet einen Vordämpfer, wohingegen der axiale Teilbereich 234 einen Hauptdämpfer bildet. Im Betrieb wird zunächst der Vordämpfer im Teilbereich 232 tordiert, so dass sich bei einer Drehmomentübertragung das Antriebselement 212 relativ zu dem Abtriebselement 214 um die Längsachse A verdrehen kann. Der Hauptdämpfer weist hierfür ein entsprechendes Drehspiel auf. Die Steifigkeit des Vordämpfers ist relativ gering. Ist das in dem Hauptdämpfer im axialen Bereich 234 vorgesehene Spiel aufgebraucht, so kann jede weitere Relativverdrehung zwischen dem Antriebsteil 212 und dem Abtriebsteil 214 nur noch unter Torsions-Deformation sowohl des Vordämpfers als auch des Hauptdämpfers in beiden axialen Teilbereichen 232 und 234 erfolgen. So kommt es wiederum zu einer gestuften progressiven Kennlinie bei der Dämpfung von Drehschwingungen.

Es sei angemerkt, dass die Anschlagformation 240 und die Gegenanschlagformation 242 bei dem in Fig.5 und 6 gezeigten Ausführungsbeispiel, aber ebenso bei den vorangehend beschriebenen und im Folgenden noch zu erläuternden Ausführungsbeispielen durch Rollumformen hergestellt werden können.

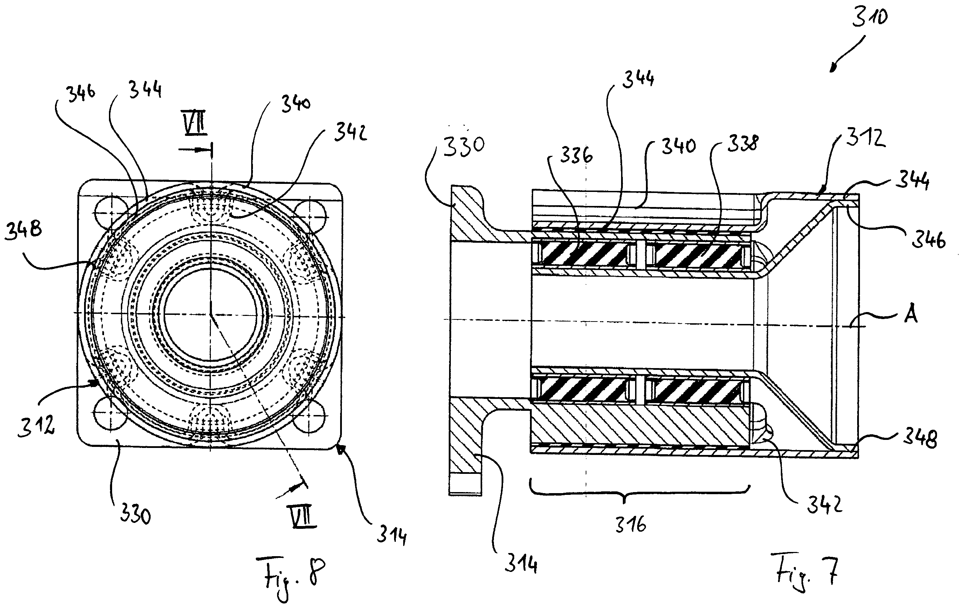

Eine weitere Ausführungsform gemäß Fig.7 und 8 wird wiederum unter Verwendung der vorangehend bereits benutzten Bezugszeichen beschrieben, jedoch mit der Ziffer "3" vorangestellt.

Die Ausführungsform gemäß Fig.7 und 8 unterscheidet sich von der Ausführungsform gemäß Fig.5 und 6 im Wesentlichen darin, dass der Hauptdämpfer und der Vordämpfer nicht axial nebeneinander angeordnet sind, sondern dass die beiden Dämpfer axial überlappend zueinander angeordnet sind. Dadurch lassen sich die beiden axialen Bereiche 232 und 234 in dem erheblich kleineren axialen Bereich 316 unterbringen. Man erkennt, dass hierfür das Antriebselement 312 mehrteilig ausgebildet ist, nämlich mit einem äußeren Element 344 und einem inneren Element 346. Diese beiden sind an ihrem Kontaktbereich bei 348 miteinander verschweißt. Das äußere Teil 344 weist die Anschlagformation 340 auf, wohingegen das innere Teil 346 in dem axialen Bereich 316 im Wesentlichen kreiszylindrisch ausgebildet ist. Das Abtriebselement 314 ist als Gussteil ausgeführt und zur Anbringung an einem Kreuzgelenk an seinem in Fig.7 linken Ende 330 entsprechend gestaltet. Im axialen Bereich 316 weist das Abtriebselement 314 einen im Wesentlichen kreiszylindrischen Innenumfang auf, wohingegen der Außenumfangsbereich mit einer entsprechenden Gegenanschlagformation 342 versehen ist. Man erkennt, dass zwischen dem Innenteil 346 und der kreiszylindrischen Innenumfangsfläche des Abtriebselements 314 die beiden Gummikörper 336 und 338 des Vordämpfers angeordnet sind. Zwischen der Anschlagformation 340 und der Gegenanschlagformation 342 ist eine Gummischicht 344 des Hauptdämpfers angebracht.

Die Anordnung verhält sich so, wie mit Bezug auf Fig.5 und 6 beschrieben, das heißt sie zeigt eine gestuft progressiv verlaufende Kennlinie bei der Dämpfung von Torsionsschwingungen.

Auch diese Anordnung ist im Crashfall in Richtung der Längsachse A bei Überschreiten einer vorbestimmten Kraft destruktiv teleskopierbar, wobei sich das Abtriebselement 314 unter Aufbrechen der durch die beiden Gummikörper 336 und 338 sowie die Gummilage 344 gebildeten Verbindungen in das Antriebselement 312 einschiebt. Dadurch kann die Länge des Antriebsstrangs gezielt reduziert werden.

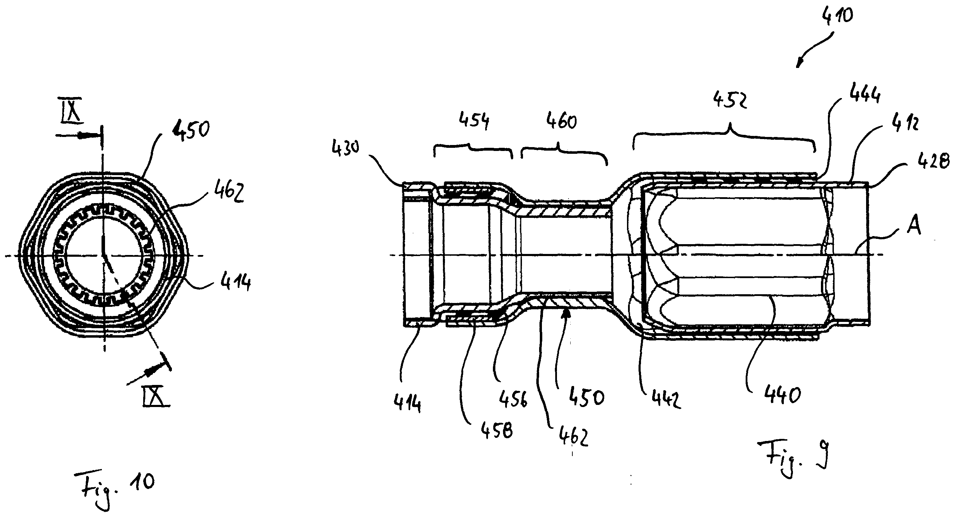

Ein weiteres erfindungsgemäßes Ausführungsbeispiel gemäß Fig.9 und 10 wird wiederum unter Verwendung der in den vorangehend beschriebenen Ausführungsbeispielen benutzten Bezugszeichen beschrieben, jedoch mit der Ziffer "4" vorangestellt.

Die Besonderheit dieser Ausführungsform liegt darin, dass das Antriebselement 412 und das Abtriebselement 414 über ein Zwischenelement 450 miteinander verbunden werden. Das Antriebselement 412 ist wieder mit einer Anschlagformation 440 versehen. Gleichermaßen ist das Zwischenelement 450 in dem axialen Bereich 452 mit einer korrespondierenden Gegenanschlagformation 442 versehen. Zwischen diesen ist eine Gummilage 444 ausgebildet, die den Hauptdämpfer bildet. In dem axialen Teilbereich 454 sind das Zwischenelement 450 und das Abtriebselement 414 über eine Gummischicht 456 geringerer Steife mit Metalleinlage 458 verbunden. Ferner sei darauf hingewiesen, dass das Zwischenelement 450 mit dem Abtriebselement 414 in einem axialen Teilbereich 460 durch eine Verzahnung 462 mit Spiel in Umfangsrichtung verbunden ist.

Auch die Drehmomentübertragungseinrichtung 410 zeigt eine gestuft progressive Kennlinie. Zunächst kommt es zu einer Relativverdrehung zwischen dem Zwischenelement 450 und dem Abtriebselement 414 im Bereich der Gummilage 456 verhältnismäßig geringer Steife. Schließlich wird in Folge dieser Relativverdrehung das Spiel in der Verzahnung 462 aufgebraucht. Die Gummischicht 444 lässt dann nur noch mit erheblich steilerer Kennlinie eine Relatiwerdrehung zwischen dem Zwischenelement 450 und dem Antriebselement 412 zu, bis schließlich in der Gummischicht 444 ein Zustand maximaler Kompression eintritt, so dass eine Drehmomentübertragung über die Anschlagformation 440 und die Gegenanschlagformation 442 stattfindet.

Auch die Anordnung gemäß Fig.9 und 10 ist im Crash-Fall teleskopierbar, wobei das Antriebselement 412 und das Abtriebselement 414 jeweils teleskopartig ineinander und in das Zwischenelement 450 eingeschoben werden können.

Es sei ergänzend erwähnt, dass die Anschlagformation 440 und die Gegenanschlagformation 442 wieder durch korrespondierende Polygonflächen erreicht werden, wie in Fig.10 gezeigt.

Schließlich sei angemerkt, dass die Ausführungsform gemäß Fig.9 und 10 zur Anbringung an einer Kardanwelle durch Verschweißen der beiden Enden 428 und 430 mit korrespondierenden Wellenenden ausgebildet ist.

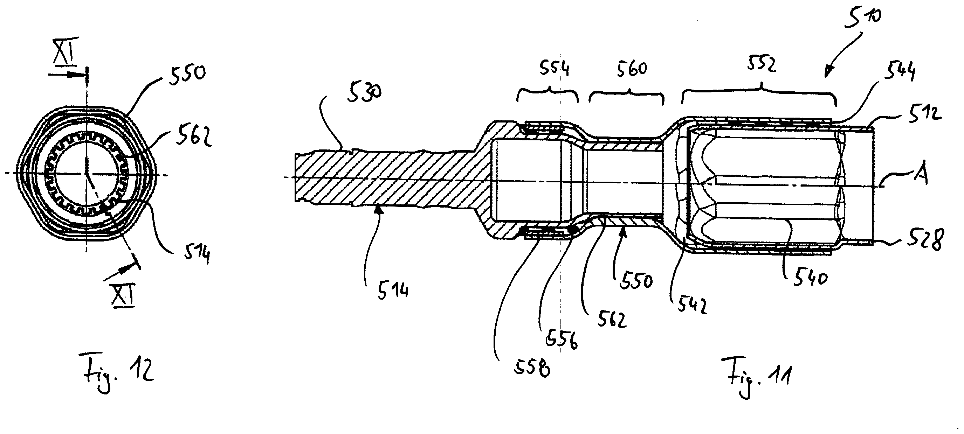

Die Ausführungsform gemäß Fig.11 und 12 unterscheidet sich von der Ausführungsform gemäß Fig.9 und 10 lediglich dadurch, dass das Abtriebselement 514 als Gelenkbolzen für ein homogenetisches Gelenk ausgebildet ist.

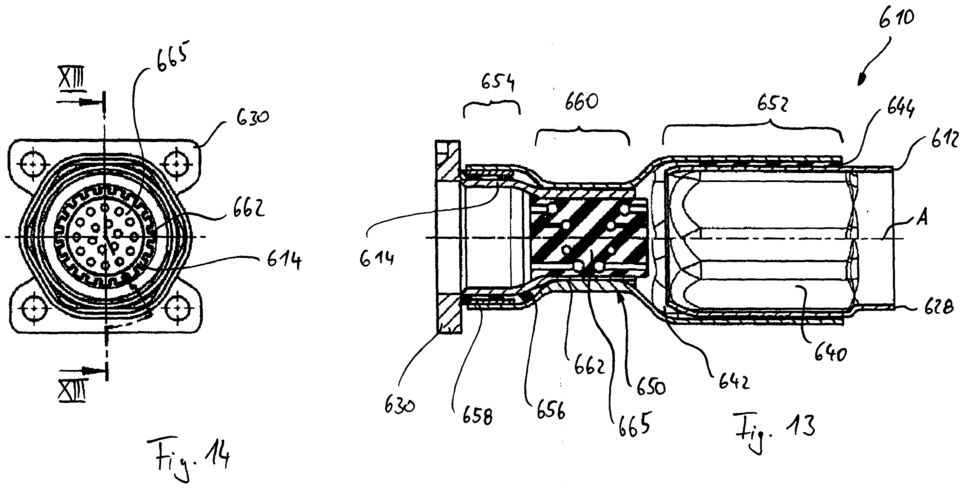

Die Ausführungsform gemäß Fig.13 und 14 unterscheidet sich von der Ausführungsform gemäß Fig.9 und 10 im Wesentlichen in zwei Aspekten. Zum Einen ist das Ende des Abtriebselements 614 zur Anbringung an einem Kreuzgelenk ausgebildet. Zum Anderen ist in dem axialen Bereich 660 innerhalb des hohl ausgebildeten Abtriebselements 614 ein Gummikörper 665 angeordnet, der Perforationen in axialer Richtung und quer hierzu aufweist. Dieser Gummikörper 665 dient zur akustischen Abkopplung von Verzahnungsgeräuschen an der Verzahnung 662. Die in Folge der Wechselwirkung der Verzahnungsflächen der Verzahnung 662 auftretenden Verzahnungsgeräusche treten als Körperschall in den Gummikörper 665 ein. An den Grenzflächen der in Achsrichtung sowie quer hierzu verlaufenden Kanäle bricht sich der Körperschall und wird reflektiert. Dadurch kommt es zu Interferenzen und zu einer Dämpfung des auftretenden Schalls, so dass die Verzahnungsgeräusche in ihrer Intensität geschwächt werden.

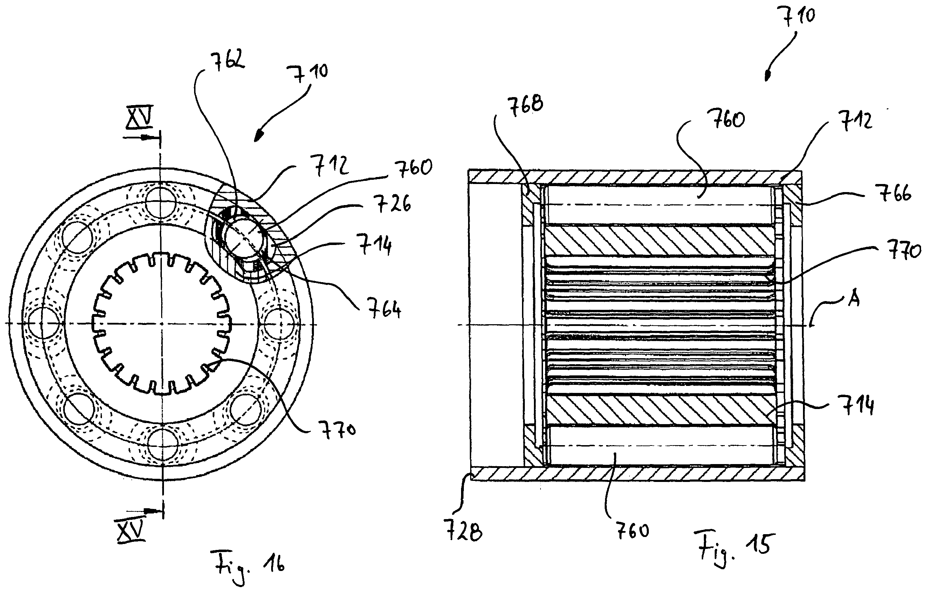

In der Ausführungsform gemäß Fig.15 und 16 wird die gestuft progressive Kennlinie nicht durch Vordämpfer und Hauptdämpfer erreicht, sondern durch den Einsatz von Wälzkörpern. Die Drehmomentübertragungseinrichtung 710 weist ein Antriebselement 712 und ein Abtriebselement 714 auf. Das Abtriebselement 714 ist mit einer Innenverzahnung versehen und innerhalb des rohrförmigen Antriebselements 712 angeordnet. Das Antriebselement 712 und das Abtriebselement 714 sind durch eine in einem Ringszwischenraum zwischen diesen ausgebildete und an diesen anvulkanisierte Gummilage 726 miteinander verbunden. In die Gummilage 726 sind Wälzrollen 760 eingebettet. Es ist festzustellen, dass die Wälzrollen in Umfangsrichtung nicht unmittelbar an der Gummilage 726 anliegen. Vielmehr ist in Umfangsrichtung ein luftgefülltes sichelförmiges Spiel 762 bzw. 764 beidseits der Rollen 760 vorgesehen. Die axiale Position des Abtriebselements 714 relativ zu dem Antriebselement 712 wird durch Haltebleche 766 und 768 gesichert, die unter Presssitz in das rohrförmige Antriebselement 712 eingepresst sind.

Das Antriebselement 712 lässt sich an seinem Ende 728 mit einer Welle verschweißen. Das Abtriebselement lässt sich über eine Zahnformation 770 mit einem korrespondierend verzahnten Wellenabschnitt verbinden.

Im Betrieb kommt es zunächst zu einer Relativverdrehung von Antriebselement 712 und Abtriebselement 714, wobei die Gummilage 726 verformt wird. Dabei werden auch die sichelförmigen Zwischenräume 762 und 764 deformiert. Eine solche Relativverdrehung erfolgt unter verhältnismäßig geringem Widerstand. Schließlich kommt es jedoch zur Anlage der Rollen 760 an den die sichelförmigen Zwischenräume 762 und 764 definierenden Grenzflächen der Gummilage 726. Sobald es zu einer solchen Anlage gekommen ist, wird eine Deformation erheblich erschwert, da der Gummi durch Flächenpressung deformiert werden muss. Es wird also eine gestuft progressive Kennlinie im Rahmen der Relativverdrehung von Antriebselement 712 und Abtriebselement 714 erreicht.

Ferner ist auch die vorstehend schon mehrfach beschriebene Crash-Funktion gegeben. Kommt es zu einer axialen Belastung der Drehmomentübertragungseinrichtung 710, wobei eine bestimmte Mindestkraft überschritten wird, so werden die Haltebleche 766 unter Aufhebung ihres Presssitzes aus dem Antriebselement 712 herausgeschoben, so dass sich das Abtriebselement 714 unter Zerstörung der Gummilage 726 relativ zu dem Antriebselement 712 verlagern lässt. Dadurch lässt sich, wie bereits beschrieben, ein teleskopartiges Kollabieren des Antriebsstrangs erreichen.

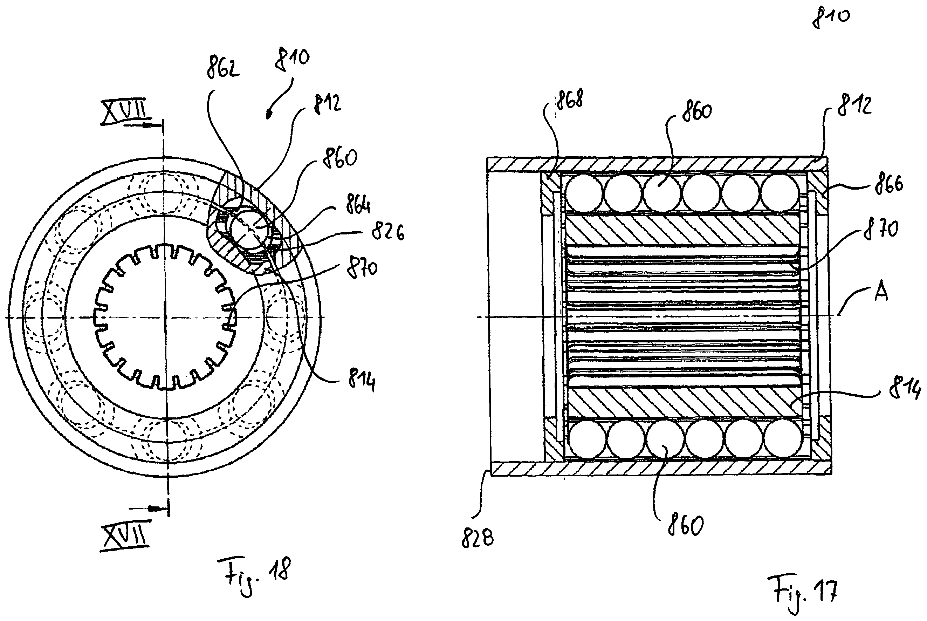

Die Ausführungsform gemäß Fig.17 und 18 unterscheidet sich von der Ausführungsform gemäß Fig.15 und 16 lediglich darin, dass die Rollen 760 durch in Reihe angeordnete kugelförmige Wälzkörper 860 ersetzt wurden, die jedoch in entsprechender Weise unter Ausbildung von sichelförmigen Zwischenräumen 862 und 864 beidseits der Wälzkörper 860 in Umfangsrichtung in der Gummilage 826 eingebettet sind. Der übrige Aufbau sowie die Funktionsweise sind identisch zu der Beschreibung mit Bezug auf Fig.15 und 16.

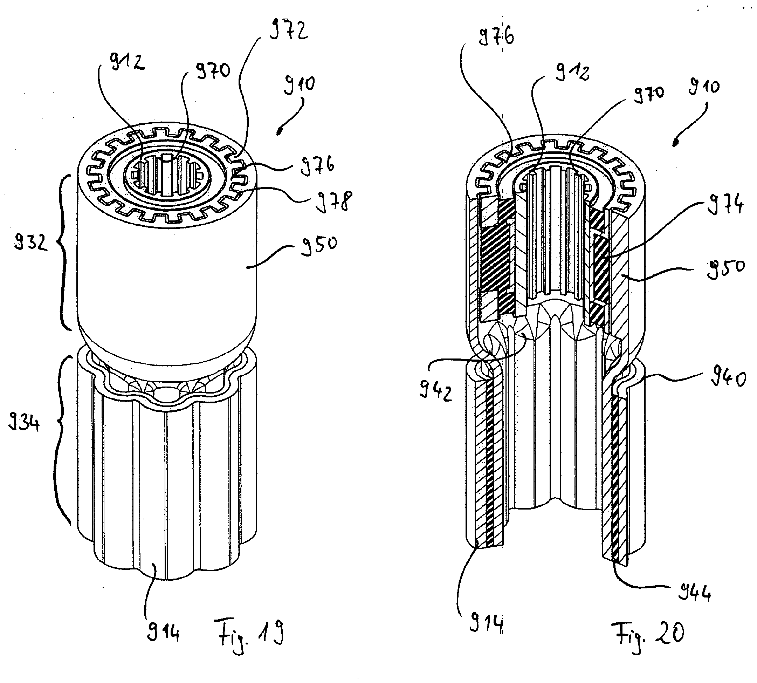

Figuren 19 und 20 zeigen eine weitere erfindungsgemäße Ausführungsform einer Drehmomentübertragungseinrichtung 910, wobei Figur 19 eine perspektivische Gesamtansicht und Figur 20 eine aufgebrochene Darstellung zeigt.

Ein Antriebselement 912 ist mit einer Innenverzahnung 970 versehen, mit der es an eine Welle gekoppelt werden kann. An den Außenumfang des Antriebselements 912 ist eine schwingungsdämpfende Gummischicht 974 anvulkanisiert, in die eine Metalleinlage 976 eingebettet ist. Die Gummischicht 974 ist ferner an den Innenumfang eines Zwischenelements 950 anvulkanisiert. Das Zwischenelement 950 und die Metalleinlage 976 stehen über ineinander greifende Verzahnungen 972 und 978 mit Drehspiel in Eingriff, sind jedoch im Rahmen des Drehspiels relativ zueinander verdrehbar.

Das Zwischenelement 950 erstreckt sich aus dem axialen Teilbereich 932, in dem es das Antriebselement 912 in sich aufnimmt, in einen axialen Teilbereich 934, in dem es von einem Abtriebselement 914 aufgenommen ist. In dem axialen Teilbereich 934 sind Zwischenelement 950 und Abtriebselement 914 mit einer Anschlagformation 940 und einer Gegenanschlagformation 942 ausgebildet. In dem axialen Teilbereich 934 ist zwischen dem Zwischenelement 950 und dem Abtriebselement 914 eine gummielastische Dämpfungsschicht 944 vorgesehen. In dem axialen Teilbereich 932 ist demnach der Vordämpfer angeordnet, wohingegen in dem axialen Teilbereich 934 der Hauptdämpfer ausgebildet ist. Die Funktionsweise ist vergleichbar mit der Funktionsweise des Ausführungsbeispiels gemäß Fig. 9 und 10, wobei der Aufbau noch kompakter ist.

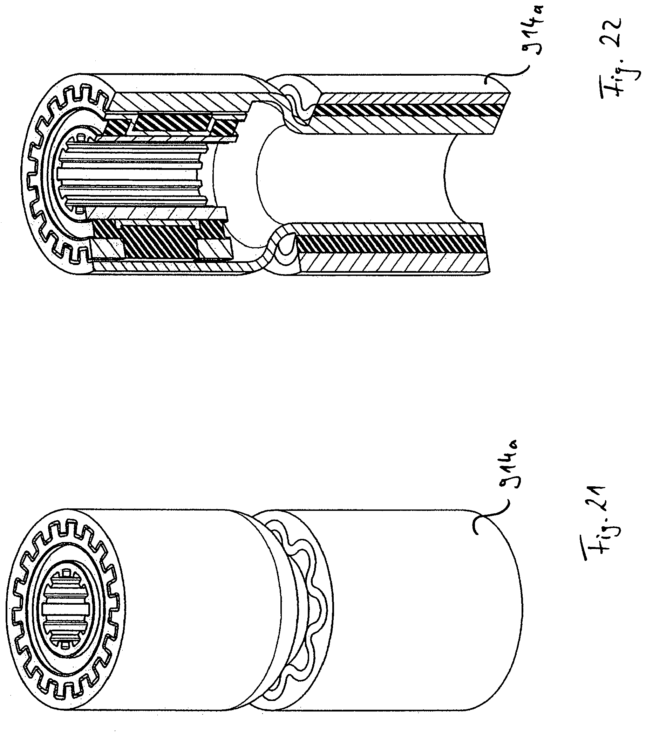

Die Ausführungsform gemäß der Figuren 21 und 22 unterscheidet sich von der Ausführungsform gemäß der Figuren 19 und 20 lediglich darin, dass das dortige Abtriebselement 914a nicht gewellt sondern mit einem kreiszylindrischen Außenumfang ausgebildet ist. Der übrige Aufbau ist identisch. Die Funktionsweise ist vergleichbar mit der Funktionsweise des Ausführungsbeispiels gemäß Fig. 9 und 10, wobei der Aufbau noch kompakter ist.

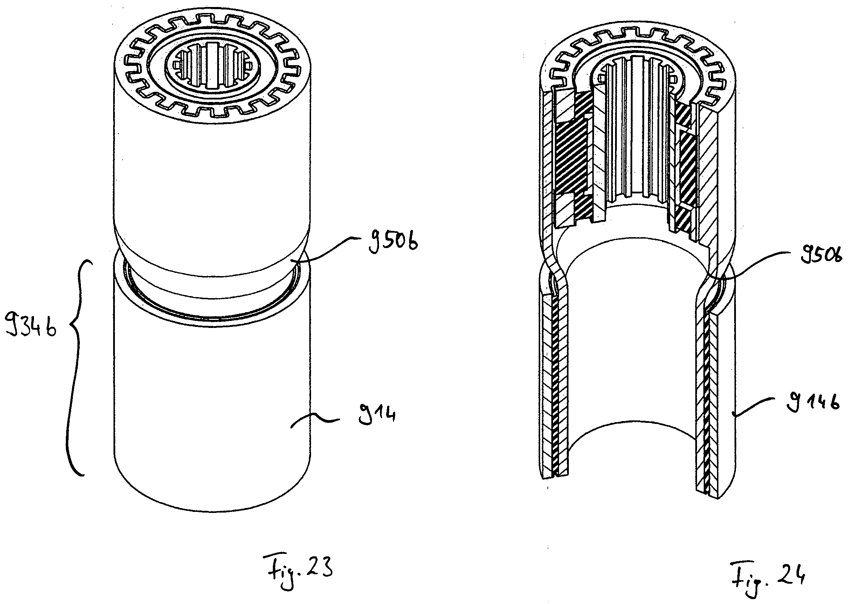

Die Ausführungsform gemäß der Figuren 23 und 24 unterscheidet sich von der Ausführungsform gemäß der Figuren 19 und 20 lediglich darin, dass der axiale Bereich 934b sowohl am Zwischenelement 950b als auch am Abtriebselement 914 kreiszylindrisch ohne Anschlagformation und Gegenanschlagformation ausgebildet ist. Der übrige Aufbau ist identisch. Die Funktionsweise ist vergleichbar mit der Funktionsweise des Ausführungsbeispiels gemäß Fig. 9 und 10, wobei der Aufbau noch kompakter ist.

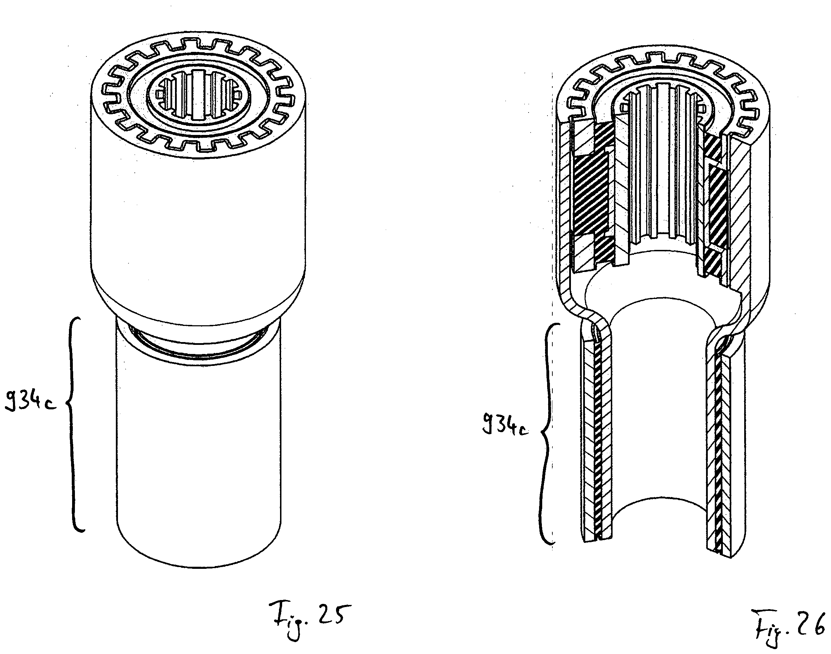

Die Ausführungsform gemäß der Figuren 25 und 26 unterscheidet sich von der Ausführungsform gemäß der Figuren 23 und 24 lediglich darin, dass der axiale Bereich 934c mit reduziertem Durchmesser ausgebildet ist. Der übrige Aufbau ist identisch. Die Funktionsweise ist vergleichbar mit der Funktionsweise des Ausführungsbeispiels gemäß Fig. 9 und 10, wobei der Aufbau noch kompakter ist.

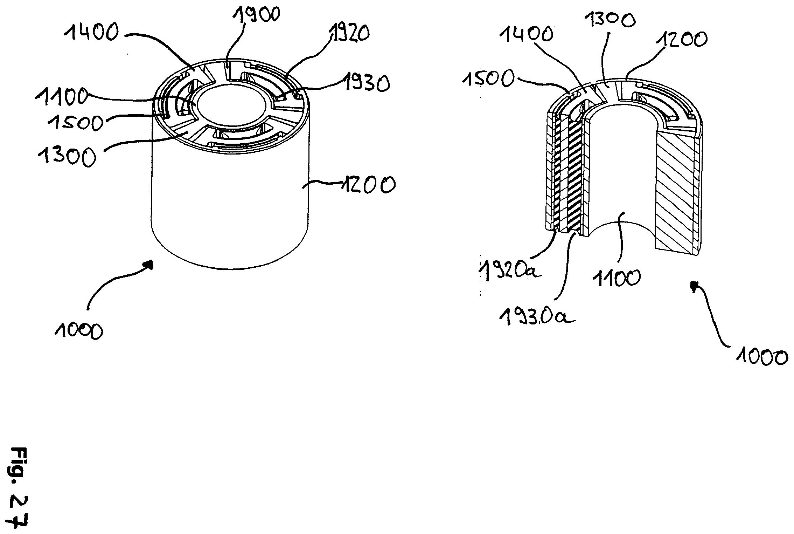

In der Fig. 27 bis Fig. 30 sind vier weitere Ausführungsformen einer Drehmomentübertragungseinrichtung dargestellt. In sämtlichen der Darstellungen 27 bis 30 weisen die letzten drei Ziffern der Bezugszeichen auf identische oder hinsichtlich ihrer Funktion ähnliche Bauteile der hier beschriebenen Drehmomentübertragungseinrichtungen hin. Die erste Ziffer zeigt die jeweilige Ausführungsform an. Die linke Abbildung in der Fig. 27 bis Fig. 30 stellt jeweils eine perspektivische Ansicht der Drehmomentübertragungseinrichtungen dar, während die rechte Abbildung teilweise geschnittene Ansichten derselben zeigen. Im Anschluss an die Beschreibung der Bauteile der jeweiligen Ausführungsformen folgt eine kurze Beschreibung der Funktionsweise derselben.

Die Drehmomentübertragungseinrichtung 1000 der Fig. 27 umfasst ein zylindrisch ausgebildetes Antriebselement 1100 und ein koaxial dazu angeordnetes zylindrisch ausgebildetes Abtriebselement 1200, die um eine gemeinsame Drehachse drehbar sind. Ferner weist das Antriebselement 1100 in radialer Richtung nach außen verlaufende Vorsprünge (drei radiale Rippen sind gezeigt) 1300 auf, die zu gleichen Winkelabständen entlang des Umfanges des Antriebselements 1100 angeordnet sind und formschlüssig an der radial innenliegenden Oberfläche des Abtriebselements 1200 anliegen. Ein Zwischenelement 1400 ist um die Drehachse drehbeweglich zwischen dem Antriebselement 1100 und dem Abtriebselement 1200 vorgesehen. Bei der in Fig. 27 dargestellten Ausführungsform sind drei Zwischenelemente 1400 nahezu äquidistant in Umfangsrichtung angeordnet.

Das Zwischenelement 1400 bestimmt zwischen dem Antriebselement 1100 und dem Abtriebselement 1200 kreisbogenförmige Zwischenräume 1920, 1930, in denen elastische Gummiteile 1920a, 1930a untergebracht sind. Das Zwischenelement 1400 ist als gekrümmtes H-förmiges Profil ausgebildet und besitzt eine Länge von ungefähr π/2. Ferner ist ein Zwischenraum 1900 zwischen den Enden des Zwischenelements 1400 und den in radialer Richtung nach außen verlaufenden Vorsprüngen 1300 des Antriebselements 1100 bestimmt. Überdies sind radial nach innen hervorstehende Anschläge 1500 an dem Abtriebselement 1200innerhalb des Zwischenraumes 1920 angeordnet, die die Drehbeweglichkeit des Zwischenelements 1400 begrenzen. Vorzugsweise wird die Drehbeweglichkeit des Zwischenelements 1400 auf 1-3° begrenzt.

Wie in der rechten Abbildung der Fig. 27 zu sehen ist füllen die Gummiteile 1920a, 1930a die Zwischenräume 1920, 1930 vollständig aus. Eine vollständige Ausfüllung dieser Zwischenräume 1920, 1930 ist jedoch nicht notwendig. Von Bedeutung ist nur, dass die Gummiteile 1920a, 1930a das Zwischenteil 1400 jeweils mit dem Antriebselement 1100 und dem Abtriebselement 1200 koppeln. Zu diesem Zweck liegt das Gummiteil 1920a reibschlüssig an dem Zwischenelement 1400 im Bereich des Zwischenraumes 1920 und an dem Abtriebselement 1200 an, und das Gummiteil 1930a liegt reibschlüssig an dem Zwischenelement 1400 im Bereich des Zwischenraumes 1930 und an dem Antriebselement 1100 an. Bei dieser Ausführungsform ist die Härte des Gummiteils 1930a kleiner als die des Gummiteils 1920a.

Wird nun das Antriebselement 1100 an einer nicht dargestellten Welle angebracht, so wird die Drehbewegung der Welle mit Hilfe der Drehmomentübertragungseinrichtung 1000 auf eine an das Abtriebselement 1200 angebrachte Nabe (nicht dargestellt) übertragen. Bei der Übertragung der Drehbewegung verschiebt sich zunächst das Antriebselement 1100 relativ zu dem Abtriebselement 1200. Bei dieser Relativbewegung wird das Gummiteil 1930a so lange geschert (tordiert), bis der Vorsprung 1300 an das Zwischenteil 1400 anstößt. Gleichzeitig unterliegt das Gummiteil 1920a einer Scherung. In dem Fall, dass die Härte (Schervermögen) des Gummiteils 1930a deutlich geringer als die Härte des Gummiteils 1920a ist, kann es passieren, dass der Vorsprung 1300 an dem Zwischenteil 1400 anstößt, bevor das Gummiteil 1920a eine signifikante Scherung erfahren hat. Liegt der Vorsprung 1300 nun am Zwischenteil 1400 an und wird das Antriebselement 1100, und somit der Vorsprung 1300, weiter relativ zu dem Abtriebselement 1200 gedreht, so bleibt das Ausmaß der Scherung des Gummiteils 1930a unverändert, d. h. die Scherung des Gummiteils 1930a wird "eingefroren". Das Gummiteil 1920a wird solange weiter geschert, bis das Ende des H-förmigen Zwischenteils 1400 an den Anschlag 1500 anstößt.

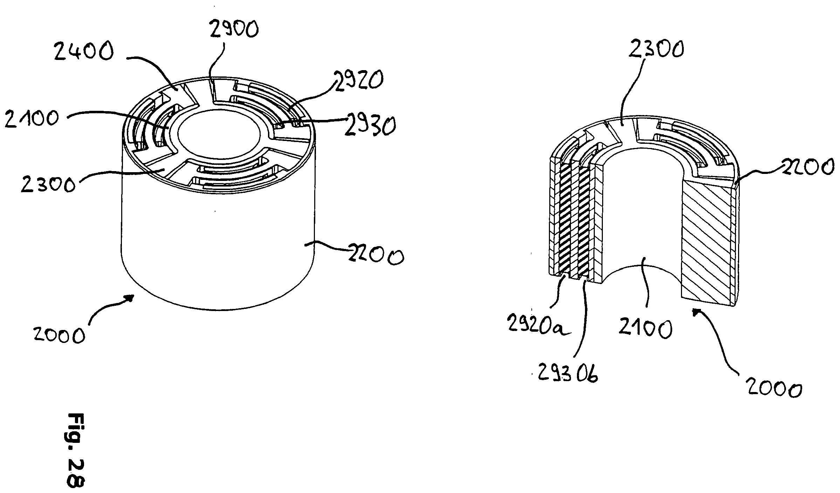

Im Unterschied zu der in Fig. 27 dargestellten Ausführungsform weist die in Fig. 28 dargestellte Drehmomentübertragungseinrichtung 2000 im Wesentlichen den gleichen Aufbau auf, allerdings mit dem Unterschied, dass die axiale Breite (Dicke) des Gummiteils 2920a (entspricht dem Gummiteil 1920a der Fig. 22) erhöht und hier gleich der axialen Breite (Dicke) des Gummiteils 2930a (entspricht dem Gummiteil 1930a der Fig. 27) ist. Durch die Veränderung der Breite des Gummiteils 2920a wird dadurch dessen Schervermögen (Widerstand gegenüber einer Scherung) verringert. Somit erfährt das Gummiteil 2920a bei der Drehbewegung des Antriebselements 2100 und des Zwischenteils 2400 eine höhere Torsion (Scherung) als das entsprechende Gummiteil 1920a der Fig. 27.

Durch gezielte Auswahl der Härte der Gummiteile 1920a, 1930a, 2920a, 2930a sowie deren Breite (Form, Geometrie) kann das Torsionsverhalten der Drehmomentübertragungseinrichtung 1000, 2000 gezielt beeinflusst werden. Da das Gummiteil 1930a, 2930a den Verlauf der Torsionskennlinie im Bereich des Nullpunktdurchganges bestimmt, und dieser möglichst flach gehalten werden soll und deshalb ein relativ weiches Material für die Gummiteile 1930a, 2930a verwendet wird, bestimmt die Härte der Gummiteile 1920a, 2920a den Bereich der Torsionskennlinie bei größeren Drehwinkeln. Durch Auswahl einer bestimmten Härte für die Gummiteile 1920a, 2920a kann ein entsprechend progressiver Verlauf der Torsionskennlinie erzielt werden.

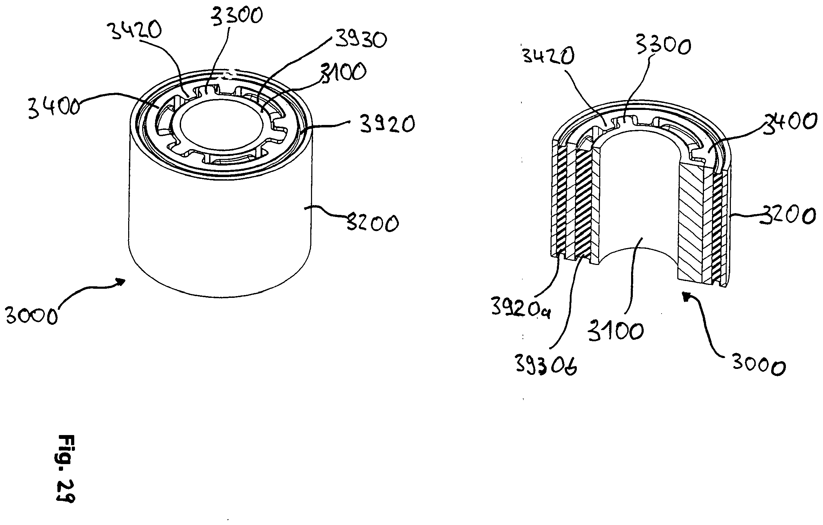

Im Unterschied zu den voranstehend beschriebenen Ausführungsformen der Fig. 27 und der Fig. 28 zeigt die in Fig. 29 dargestellte Ausführungsform ein Zwischenteil 3400, das zu einer geschlossenen Ringform ausgebildet ist. Das Zwischenteil 3400 weist in radialer Richtung nach innen verlaufende Vorsprünge 3420 auf, die mit den in radialer Richtung nach außen verlaufenden Vorsprüngen 3300 des Antriebselements 3100 in Eingriff bringbar sind. So ist in der Fig. 29 zu erkennen, dass jeweils zwei Vorsprünge 3420 des Zwischenteils 3400 in Umfangsrichtung benachbart einem Vorsprung 3300 des Antriebselements 3100 angeordnet sind. Die Vorsprünge 3300 sind in gleichmäßigen Winkelabständen zueinander entlang des Umfanges des Antriebsteils 3100 angeordnet. Bezugnehmend auf die rechte Abbildung der Fig. 29 ist ein inneres Gummiteil 3930a zwischen dem Zwischenteil 3400 und dem Antriebsteil 3100 reibschlüssig eingepasst. Die Ausführungsform der Fig. 29 umfasst drei Gummiteile 3930a, die in drei bogenförmig ausgebildeten Zwischenräumen 3930 eingepasst sind. Das äußere Gummiteil 3920a ist geschlossen ringförmig ausgebildet und in dem geschlossenen zylindrischen Zwischenraum 3920 zwischen dem Abtriebselement 3200 und dem Zwischenteil 3400 reibschlüssig untergebracht.

Wird das Antriebselement 3100 relativ zu dem Abtriebselement 3200 gedreht, so werden beide Gummiteile 3920a, 3930a geschert. Sobald die Vorsprünge 3300 an die Vorsprünge 3420 anstoßen, wird der Scherzustand des Gummiteils 3930a "eingefroren". Bei weiter anhaltender Drehung des Antriebselements 3100 wird nunmehr das Gummiteil 3920a weiter geschert, bis der Scherwiderstand des Gummiteils 3920a überwunden ist und das Abtriebselement 3200 in Drehung versetzt wird. Auch hier kann durch gezielte Auswahl der Härte der Gummiteile 3920a, 3930a sowie deren Breite (Dicke) das Torsionsverhalten (Torsionskennlinie) der Drehmomentübertragungseinrichtung 3000 gezielt beeinflusst werden.

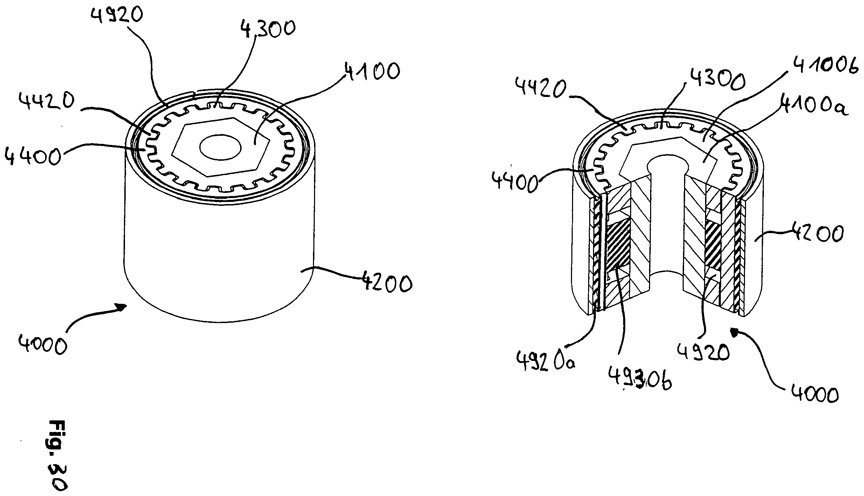

Im Unterschied zu der in Fig. 29 gezeigten Ausführungsform weist die Ausführungsform der Fig. 30 ein geschlossen ausgebildetes Zwischenteil 4400 auf, das in verzahnenden Eingriff mit einem Antriebselement 4100a, 4100b treten kann. Das Antriebselement umfasst ein außen als Sechskant und innen zylindrisch ausgebildetes Element 4100a. An den axialen Enden des Elements 4100a sind ringförmig geschlossene Elemente 4100b angebracht. Die Elemente 4100b weisen an ihrem radial äußeren Umfang Vorsprünge 4300 auf, die in gleichen Winkelabständen angeordnet sind. Der in Fig. 30 dargestellte Sechskant dient zur leichteren Montage der stirnseitigen Endelemente 4100b. Dadurch, dass das Antriebselement in relativ kurzen Abständen äquidistant in Umfangsrichtung angeordnete Vorsprünge 4300 aufweist, ist das Gummiteil 4930a, welches das Antriebsteil 4100 reibschlüssig mit dem Zwischenteil 4400 koppelt, axial mittig in einem ringförmig geschlossenen Hohlraum 4920 der Drehmomentübertragungseinrichtung 4400 angeordnet (siehe rechte Abbildung der Figur 30). Das Gummiteil 4920a ist in einem geschlossen zylindrisch ausgebildeten Zwischenraum 4920 zwischen dem Abtriebselement 4200 und dem Zwischenteil 4400 untergebracht.

Wie in der rechten Abbildung der Fig. 30 zu erkennen ist, besitzen die Gummiteile 4920a, 4930a unterschiedliche Breiten. Ferner ist der Reibschlusskontakt des Gummiteils 4920a mit dem Zwischenteil 4400 größer als der des Gummiteils 4930a. Auch bei der in Fig. 30 dargestellten Ausführungsform bestimmt die Scherwirkung des Gummiteils 4930a den Verlauf der Torsionskennlinie im Bereich des Nullpunktdurchgangs, während das relativ dünn ausgebildete Gummiteil 4920a eine progressiv verlaufende Torsionskennlinie bei höheren Drehwinkeln ermöglicht.

Gemäß den Figuren 27 bis 30 koppeln die Gummiteile 1920a, 1930a - 4920a, 4930a das Zwischenteil 1400 - 4400 in Drehrichtung des Antriebselements 1100 - 4100 und des Abtriebselements 1200 - 4400 federelastisch koppeln. Des weiteren können die Gummiteile 1920a, 1930a - 4920a, 4930a das Antriebs- und das Abtriebselement in radialer Richtung federelastisch mit dem Zwischenteil koppeln.

Ferner kann die Funktion des Antriebselements mit der Funktion des Abtriebselements vertauscht werden, d.h. das hier beschriebene Antriebselement wird zu einem Abtriebselement und das hier beschriebene Abtriebselement wird zu einem Antriebselement.

Überdies ist es denkbar, dass die federelastische Funktion der Gummiteile 1920a, 1930a - 4920a, 4930a durch andere Federkörper realisiert werden kann, beispielsweise durch Schraubenfedern, ebene Spiralfedern etc.

Bei sämtlichen der hier beschriebenen Ausführungsformen gemäß Figuren 27 bis 30 kann das Antriebselement 1100 - 4100, das Abtriebselement 1200 - 4200 sowie das Zwischenteil 1400 - 4400 aus einem Metall, beispielsweise Aluminium, oder einem Kunststoff hergestellt sein. Für die Gummiteile 1920a, 1930a - 4920a, 4930a wird bevorzugt Gummi mit einer Shore-Härte im Bereich von 40 bis 80 verwendet.

Weiterhin kann das Antriebselement 1100 - 4100 durch das Gummiteil 1930a-4930a und das Abtriebselement 1200 - 4200 durch das Gummiteil 1920a - 4920a stoffschlüssig mit dem Zwischenteil 1400 - 4400 gekoppelt sein.

Die Zwischenteile 1400 - 4400 können bei sämtlichen Ausführungsformen gemäß Figuren 27 bis 30 als Schwingungstilger agieren, da sie zwischen dem Abtriebsteil 1200 - 4200 und dem Antriebsteil 1100 - 4100 drehbeweglich ("schwimmend") gelagert sind. Treten in dem Antriebsteil 1100 - 4100 Schwingungen auf, so kann über die reibschlüssige Kopplung durch das Gummielement 1930a-4930a das Zwischenteil 140-440 eine zu den Schwingungen gegenphasige Schwingung aufbauen. Das Zwischenteil 1400 - 4400 agiert dabei als frei bewegliche Ausgleichsmasse, durch die die Schwingungen des Antriebsteils 1100 - 4100 ausgeglichen werden und somit nicht auf das Abtriebsteil 1200-4200 übertragen werden.

## Patentansprüche

1. Drehmomentübertragungseinrichtung (10; 210; 310) zum schwingungsreduzierten Übertragen von Drehmomenten über wenigstens eine Welle, wobei die Drehmomentübertragungseinrichtung zur Kopplung zweier Wellenenden dient, mit: einem Antriebselement (12; 212; 312) und einem mit dem Antriebselement (12; 212; 312) verbundenen Abtriebselement (14; 214; 314), wobei zwischen dem Antriebselement (12; 214; 314) und dem Abtriebselement (14; 214; 314) wenigstens eine Dämpfungsanordnung ausgebildet ist, die das Antriebselement (22; 222; 322) mit dem Abtriebselement (14; 214; 314) relativ zueinander verdrehbar miteinander verbindet, wobei die Dämpfungsanordnung mit wachsender Relativverdrehung zwischen Antriebselement (12; 212; 312) und Abtriebselement (14; 214; 314) eine gestuft progressiv verlaufende Kennung aufweist, wobei das Antriebselement (12; 212; 312) eine Anschlagformation (18; 240; 340) aufweist und das Abtriebselement (14; 214;314) eine komplementäre Gegenanschlagformation (20; 242; 342) aufweist, **dadurch gekennzeichnet, daß** zwischen dem Antriebselement (12; 212; 312) und dem Abtriebselement (14; 214; 314) außerhalb der zusammenwirkenden Anschlagformation (18; 218; 318) und Gegenanschlagformation (20; 220;320) wenigstens ein gummielastischer Vordämpferkörper vorgesehen ist, der das Antriebselement (212; 312) drehschwingungsdämpfend mit dem Abtriebselement (214; 314) verbindet, und zwischen der Anschlagformation (18; 240; 340) und der komplementären Gegenanschlagformation (20; 242; 342) ein umlaufender radialer Zwischenraum ausgebildet ist, der ein Drehspiel bereitstellt und in dem eine umlaufende komprimierbare Dämpfungsschicht vorgesehen ist.

2. Drehmomentübertragungseinrichtung (10; 210; 310) nach Anspruch 1, **dadurch gekennzeichnet, dass** die Anschlagformation (18; 240; 340) und die Gegenanschlagformation (20; 242; 342) in Form einer spielbehafteten Keilwellenverzahnung ausgebildet sind.

3. Drehmomentübertragungseinrichtung (10) nach Anspruch 1,
**dadurch gekennzeichnet, dass** die Anschlagformation (18) und die Gegenanschlagformation (20) in Form einer spielbehafteten polygonalen Formschlussverbindung ausgebildet sind.

4. Drehmomentübertragungseinrichtung (10) nach einem der Ansprüche 1 bis 3, **dadurch gekennzeichnet, dass** in die Gummischicht eine Fadeneinlage (22) eingebettet ist.

5. Drehmomentübertragungseinrichtung (10) nach einem der Ansprüche 1 bis 3, **dadurch gekennzeichnet, dass** in die Gummischicht eine Metalleinlage (24) eingebettet ist.

6. Drehmomentübertragungseinrichtung (410) nach einem der vorangehenden Ansprüche,
**dadurch gekennzeichnet, dass** zwischen dem Antriebselement (412) und dem Abtriebselement (414) ein Zwischenelement (450) angeordnet ist, wobei das Zwischenelement (450) rohrförmig mit dem Antriebselement (412) und dem Abtriebselement (414) unter jeweiliger Zwischenschaltung einer Dämpfungsanordnung verbunden ist.

7. Drehmomentübertragungseinrichtung (410) nach Anspruch 6,
**dadurch gekennzeichnet, dass** das Zwischenelement (450) in axialer Richtung betrachtet hintereinander mit dem Antriebselement (412) und dem Abtriebselement (414) verbunden ist, wobei sich das Antriebselement (412) mit dem Abtriebselement (414) nicht überlappt.

8. Drehmomentübertragungseinrichtung (410) nach Anspruch 6 oder 7, **dadurch gekennzeichnet, dass** das Antriebselement (412) oder/und das Abtriebselement (414) eine Anschlagformation (440) aufweisen und dass das Zwischenelement (450) in seinem jeweiligen mit dem Antriebselement (412) und dem Abtriebselement (414) zusammenwirkenden Bereich eine komplementäre Gegenanschlagformation (442) aufweist, wobei die Anschlagformation (440) und die Gegenanschlagformation (442) jeweils mit gegenseitigem Radialspiel und Drehspiel ineinander greifen.

9. Drehmomentübertragungseinrichtung (410) nach einem der Ansprüche 6 bis 8,
**dadurch gekennzeichnet, dass** das Zwischenelement (450) rohrförmig ausgebildet ist und einenends das Antriebselement (412) sowie anderenends das Abtriebselement (414) in sich aufnimmt.

10. Drehmomentübertragungseinrichtung (410) nach einem der vorangehenden Ansprüche,
**dadurch gekennzeichnet, dass** das in dem Antriebselement (412) oder/und in dem Abtriebselement (414) oder/und in dem Zwischenelement (450) ein perforierter Gummikörper zur Körperschalldämpfung aufgenommen ist.

11. Drehmomentübertragungseinrichtung (510) nach einem der vorangehenden Ansprüche,
**dadurch gekennzeichnet, dass** eine Komponente von Antriebselement (512) und Abtriebselement (514)zur Anbringung an einem Wellenende und dass die andere Komponente von Antriebselement (512) und Abtriebselement (514) zur Anbringung an einem Gelenkrohr oder einem homokinetischen Gelenk oder an einem Kreuzgelenk ausgebildet ist.

12. Drehmomentübertragungseinrichtung (710) nach einem der vorangehenden Ansprüche,
**dadurch gekennzeichnet, dass** zwischen dem Antriebselement (712) und dem Abtriebselement (714) eine gummielastische Dämpfungsschicht vorgesehen ist, die das Antriebselement (712) mit dem Abtriebselement (714) verbindet, wobei in die Dämpfungsschicht Wälzkörper (760) eingebettet sind.

13. Drehmomentübertragungseinrichtung nach Anspruch 12,
**dadurch gekennzeichnet, dass** die gummielastische Dämpfungsschicht im Bereich der Wälzkörper in Umfangsrichtung der Drehmomentübertragungseinrichtung betrachtet ein Spiel zu dem jeweiligen Wälzkörper vorsieht.

14. Drehmomentübertragungseinrichtung (710) nach einem der vorangehenden Ansprüche,
**dadurch gekennzeichnet, dass** das Antriebselement (12) und das Abtriebselement (14) bei Überschreiten einer vorbestimmten Axialkraft in Achsrichtung zueinander teleskopierbar sind.

## Claims

1. A torque transmission device (10; 210; 310) for low-vibration transmission of torque via at least one shaft, wherein the torque transmission device is used for coupling two shaft ends, and includes: a drive element (12; 212; 312) and an output element (14; 214; 314) that is connected to the drive element (12; 212; 312), wherein at least one damping assembly is provided between the drive element (12; 214; 314) and the output element (14; 214; 314), and which connects the drive element (22; 222; 322) to the output element (14; 214; 314) so that they are rotatable relative to one another, wherein the damping assembly has a staged progressive characteristic with increasing relative rotation between the drive element (12; 212; 312) and the output element (14; 214; 314), wherein the drive element (12; 212; 312) has a stop formation (18; 240; 340) and the output element (14; 214;314) has a complementary counterstop formation (20; 242; 342),
**characterized in that**
at least one rubber-elastic predamper element that connects the drive element (212; 312) to the output element (214; 314) in a torsional vibration-reducing manner is provided between the drive element (12; 212; 312) and the output element (14; 214; 314), outside the cooperating stop formation (18; 218; 318) and the complementary counterstop formation (20; 220; 320), and between the stop formation (18; 240; 340) and the complementary counterstop formation (20; 242; 342) a circumferential radial space is provided which provides rotary play, and in which a circumferential compressible damping layer is provided.

2. The torque transmission device (10; 210; 310) according to Claim 1,
**characterized in that** the stop formation (18; 240; 340) and the counterstop formation (20; 242; 342) are designed in the form of spline toothing that is subject to play.

3. The torque transmission device (10) according to Claim 1,
**characterized in that** the stop formation (18) and the counterstop formation (20) are designed in the form of a polygonal form-fit connection that is subject to play.

4. The torque transmission device (10) according to one of Claims 1 to 3, **characterized in that** a thread inlay (22) is embedded in the rubber layer.

5. The torque transmission device (10) according to one of Claims 1 to 3, **characterized in that** a metal inlay (24) is embedded in the rubber layer.

6. The torque transmission device (410) according to one of the preceding claims,
**characterized in that** an intermediate element (450) is situated between the drive element (412) and the output element (414), the intermediate element (450) being tubularly connected to the drive element (412) and to the output element (414) with respective connection of a damping assembly in between.

7. The torque transmission device (410) according to Claim 6,
**characterized in that** the intermediate element (450), viewed in the axial direction, is connected to the drive element (412) and to the output element (414) one behind the other, wherein the drive element (412) does not overlap with the output element (414).

8. The torque transmission device (410) according to Claim 6 or 7,
**characterized in that** the drive element (412) and/or the output element (414) have/has a stop formation (440), and the intermediate element (450), in its area that cooperates with the drive element (412) and the output element (414), has a complementary counterstop formation (442), wherein the stop formation (440) and the counterstop formation (442) engage with one another with mutual radial play and rotary play.

9. The torque transmission device (410) according to one of Claims 6 to 8,
**characterized in that** the intermediate element (450) has a tubular design, and at one end accommodates the drive element (412) and at the other end accommodates the output element (414).

10. The torque transmission device (410) according to one of the preceding claims,
**characterized in that** a perforated rubber body for damping structure-borne noise is accommodated in the drive element (412) and/or in the output element (414) and/or in the intermediate element (450).

11. The torque transmission device (510) according to one of the preceding claims,
**characterized in that** one component of the drive element (512) and the output element (514) is designed for mounting on a shaft end, and the other component of the drive element (512) and the output element (514) is designed for mounting on an articulated pipe or a homokinetic joint or a universal joint.

12. The torque transmission device (710) according to one of the preceding claims,
**characterized in that** is a rubber-elastic damping layer that connects the drive element (712) to the output element (714) is provided between the drive element (712) and the output element (714), wherein rolling elements (760) are embedded in the damping layer.

13. The torque transmission device according to Claim 12,
**characterized in that** the rubber-elastic damping layer provides play for the respective rolling elements in the area of the rolling elements, viewed in the circumferential direction of the torque transmission device.

14. The torque transmission device (710) according to one of the preceding claims,
**characterized in that** the drive element (12) and the output element (14) are telescopable with respect to one another when a predetermined axial force in the axial direction is exceeded.

## Revendications

1. Dispositif de transmission de couple (10 ; 210 ; 310) pour la transmission de couples à vibrations réduites par l'intermédiaire d'au moins un arbre, le dispositif de transmission de couple servant à coupler deux extrémités d'arbres, comprenant : un élément d'entraînement (12 ; 212 ; 312) et un élément de sortie (14 ; 214 ; 314) relié à l'élément d'entraînement (12 ; 212 ; 312), au moins un agencement d'amortissement étant formé entre l'élément d'entraînement (12 ; 214 ; 314) et l'élément de sortie (14 ; 214 ; 314), qui relie l'élément d'entraînement (22 ; 222 ; 322) et l'élément de sortie (14 ; 214 ; 314) l'un à l'autre de manière à ce qu'ils puissent tourner l'un par rapport à l'autre, l'agencement d'amortissement présentant une caractéristique progressive étagée avec une rotation relative croissante entre l'élément d'entraînement (12 ; 212 ; 312) et l'élément de sortie (14 ; 214 ; 314), l'élément d'entraînement (12 ; 212 ; 312) présentant une formation de butée (18 ; 240 ; 340) et l'élément de sortie (14 ; 214 ; 314) présentant une formation de contre-butée complémentaire (20 ; 242 ; 342),
**caractérisé en ce qu'**entre l'élément d'entraînement (12 ; 212 ; 312) et l'élément de sortie (14 ; 214 ; 314), à l'extérieur de la formation de butée (18 ; 218 ; 318) et de la formation de contre-butée (20 ; 220 ; 320) qui coopèrent, est prévu au moins un corps préamortisseur élastique en caoutchouc qui relie l'élément d'entraînement (212 ; 312) à l'élément de sortie (214 ; 314) en amortissant les vibrations de torsion, et **en ce qu'**entre la formation de butée (18 ; 240 ; 340) et la formation de contre-butée complémentaire (20 ; 242 ; 342) est formé un espace radial périphérique qui fournit un jeu de rotation et dans lequel est prévue une couche d'amortissement compressible périphérique.

2. Dispositif de transmission de couple (10 ; 210 ; 310) selon la revendication 1,
**caractérisé en ce que** la formation de butée (18 ; 240 ; 340) et la formation de contre-butée (20 ; 242 ; 342) sont réalisées sous la forme d'une denture d'arbre cannelé présentant du jeu.

3. Dispositif de transmission de couple (10) selon la revendication 1,
**caractérisé en ce que** la formation de butée (18) et la formation de contre-butée (20) sont réalisées sous la forme d'une liaison par complémentarité de forme polygonale présentant du jeu.

4. Dispositif de transmission de couple (10) selon l'une des revendications 1 à 3,
**caractérisé en ce qu'**un insert en fil (22) est intégré dans la couche de caoutchouc.

5. Dispositif de transmission de couple (10) selon l'une des revendications 1 à 3,
**caractérisé en ce qu'**un insert métallique (24) est intégré dans la couche de caoutchouc.

6. Dispositif de transmission de couple (410) selon l'une des revendications précédentes,
**caractérisé en ce qu'**un élément intermédiaire (450) est disposé entre l'élément d'entraînement (412) et l'élément de sortie (414), l'élément intermédiaire (450) étant relié en forme de tube à l'élément d'entraînement (412) et à l'élément de sortie (414), respectivement avec interposition d'un agencement d'amortissement.

7. Dispositif de transmission de couple (410) selon la revendication 6,
**caractérisé en ce que** l'élément intermédiaire (450) est relié, de manière successive vu dans la direction axiale, à l'élément d'entraînement (412) et à l'élément de sortie (414), l'élément d'entraînement (412) et l'élément de sortie (414) ne se recouvrant pas.

8. Dispositif de transmission de couple (410) selon la revendication 6 ou 7,
**caractérisé en ce que** l'élément d'entraînement (412) et/ou l'élément de sortie (414) présentent une formation de butée (440) et **en ce que** l'élément intermédiaire (450) présente une formation de contre-butée complémentaire (442) dans ses zones coopérant respectivement avec l'élément d'entraînement (412) et l'élément de sortie (414), la formation de butée (440) et la formation de contre-butée (442) s'engrenant chaque fois avec un jeu radial et un jeu de rotation mutuels.

9. Dispositif de transmission de couple (410) selon l'une des revendications 6 à 8,
**caractérisé en ce que** l'élément intermédiaire (450) est réalisé en forme de tube et reçoit l'élément d'entraînement (412) à une extrémité et l'élément de sortie (414) à l'autre extrémité.

10. Dispositif de transmission de couple (410) selon l'une des revendications précédentes,
**caractérisé en ce qu'**un corps en caoutchouc perforé est logé dans l'élément d'entraînement (412) et/ou dans l'élément de sortie (414) et/ou dans l'élément intermédiaire (450) pour amortir le bruit solidien.

11. Dispositif de transmission de couple (510) selon l'une des revendications précédentes,
**caractérisé en ce qu'**un composant de l'élément d'entraînement (512) et de l'élément de sortie (514) est conçu pour être fixé à une extrémité d'arbre et que l'autre composant de l'élément d'entraînement (512) et de l'élément de sortie (514) est conçu pour être fixé à un tube articulé, une articulation homocinétique ou une articulation à croisillon.

12. Dispositif de transmission de couple (710) selon l'une des revendications précédentes,
**caractérisé en ce qu'**une couche d'amortissement élastique en caoutchouc est prévue entre l'élément d'entraînement (712) et l'élément de sortie (714), laquelle relie l'élément d'entraînement (712) à l'élément de sortie (714), des corps roulants (760) étant intégrés dans la couche d'amortissement.

13. Dispositif de transmission de couple selon la revendication 12,
**caractérisé en ce que** la couche d'amortissement élastique en caoutchouc prévoit dans la zone des corps roulants, vu dans la direction périphérique du dispositif de transmission de couple, un jeu par rapport au corps roulant respectif.

14. Dispositif de transmission de couple (710) selon l'une des revendications précédentes,
**caractérisé en ce que** l'élément d'entraînement (12) et l'élément de sortie (14) sont télescopiques l'un par rapport à l'autre dans la direction axiale lorsqu'une force axiale prédéterminée est dépassée.
